# EUROPÄISCHE PATENTSCHRIFT

(11) **EP 1 221 350 B1**
(45) Veröffentlichungstag und Bekanntmachung des Hinweises auf die Patenterteilung: **22.02.2006**
(21) Anmeldenummer: 02000373.7
(22) Anmeldetag: 25.04.1997
(51) Int. Cl.: B23B 29/034

(54) **Werkzeugkopf für den Einsatz in Werkzeugmaschinen**
Toolhead for use with a machine tool
Tête d'usinage pour l'utilisation avec une machine outil

(30) Priorität: 03.05.1996 DE 19617899
(43) Veröffentlichungstag der Anmeldung: 10.07.2002
(62) Teilanmeldung aus: 97921763.5
(73) Patentinhaber: KOMET GROUP Holding GmbH, 74354 Besigheim (DE)
(72) Erfinder: Scheer, Gerhard, 74369 Löchgau (DE); Feil, Erich, 74382 Neckarwestheim (DE); Hörl, Roland, 74357 Bönnigheim (DE)
(74) Vertreter: Wolf, Eckhard

(56) Entgegenhaltungen:
- DE-A- 4 124 538
- US-A- 3 710 659

## Beschreibung

Die Erfindung betrifft einen Werkzeugkopf für den Einsatz in Werkzeugmaschinen der im Oberbegriff des Anspruchs 1 angegebenen Gattung (DE-A-3526712).

Es ist ein Werkzeugkopf ähnlicher Art bekannt (DE-A-4330822), bei welchem der Verstellmotor mit seinem im wesentlichen zylindrischen Motorgehäuse in einer quer zur Grundkörperachse ausgerichteten, die Grundkörperachse schneidenden Querausnehmung des Grundkörpers mit parallel zur Querausnehmung ausgerichteter Abtriebswelle angeordnet ist. Für den Antrieb des Arbeitsschiebers sind Getriebemittel vorgesehen, die ein auf der Abtriebswelle des Motors angeordnetes Zahnrad, ein mit dem Zahnrad kämmendes Antriebsritzel und eine starr mit diesem verbundene Gewindespindel aufweisen. Auf der Gewindespindel ist ein Gleitstein mit einer Schrägverzahnung geführt, die mit einer komplementären Schrägverzahnung eines am Schieber angeordneten Gegenstücks kämmt. Die Getriebemittel sind dort außermittig im Grundkörper angeordnet. Auf der Seite des Werkzeugschaftes ist ein ringförmiges Spulengehäuse angeordnet, in welchem sich eine Sekundärspule mit zugehöriger Stabilisierungselektronik befindet, die Bestandteil einer induktiven Übertragungsstrecke einer Stromversorgungseinrichtung für den Verstellmotor und die im Werkzeugkopf enthaltenen Elektronikschaltungen ist. Grundsätzlich ist es möglich, die Induktionsstrecke auch zur bidirektionalen Datenübertragung zu verwenden, wobei die Datensignale dem Induktionsstrom aufmoduliert werden. Die Primärspule der induktiven Übertragungsstrecke befindet sich in einem maschinenseitigen Spulengehäuse, das radial außerhalb des Werkzeugschafts in den freien Zwischenraum zwischen der Stimfläche der Maschinenspindel und der Stimfläche des werkzeugkopfseitigen Spulengehäuses eingreift. Die fliehkraftfreie Anordnung des Verstellmotors und des Getriebes im Werkzeugkopf ist bisher noch nicht befriedigend gelöst. Auch die Baugröße und die Montage-und Wartungsfreundlichkeit des bekannten Werkzeugkopfes lassen zu wünschen übrig.

Weiter ist es bei einem Plan- und Ausdrehkopf der eingangs angegebenen Art an sich bekannt (DE-A-3526712), daß die Getriebemittel eine konzentrisch zur Grundkörperachse drehbare Ausgangswelle aufweisen, die ein mit einer arbeitsschieberseitigen Verzahnung kämmendes Antriebsritzel trägt. Der Arbeitsschieber ist dort quer zur Grundkörperachse in einer Linearführung geführt. Um die internen Fliehkräfte auszugleichen, ist dort zusätzlich ein Ausgleichsschieber vorgesehen, der in entgegengesetzter Richtung zum Arbeitsschieber im Grundkörper verschiebbar ist

Ausgehend hiervon liegt der Erfindung die Aufgabe zugrunde, einen Werkzeugkopf der eingangs angegebenen Art zu entwickeln, dessen Arbeitsschieber ohne Massenverlagerung verstellbar ist und daher keinen Ausgleichsschieber erfordert.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die erfindungsgemäße Lösung besteht im wesentlichen darin, daß der Arbeitsschieber als um eine zur Grundkörperachse parallele Achse drehbarer Rundschieber ausgebildet ist, daß die Werkzeugaufnahme exzentrisch auf dem Rundschieber angeordnet ist und daß die Verzahnung durch ein mit dem Antriebsritzel kämmendes Zahnrad gebildet ist. Da sich bei der Drehung des Rundschiebers keine Massenverlagerung ergibt, kann auf einen Ausgleichsschieber verzichtet werden.

Eine bevorzugte Ausgestaltung der Erfindung sieht vor, daß der Verstellmotor eine mit der getriebeseitigen Ausgangswelle fluchtende Abtriebswelle aufweist und daß die Getriebemittel als Untersetzungsgetriebe mit zueinander fluchtenden Ein- und Ausgangsachsen ausgebildet sind. Besonders einfach läßt sich dies verwirklichen, wenn das Untersetzungsgetriebe als Harmonic-Drive-Getriebe ausgebildet ist. Um dazuhin eine besonders kompakte Bauweise zu erzielen, wird gemäß einer weiteren vorteilhaften Ausgestaltung der Erfindung vorgeschlagen, daß der Verstellmotor und die Getriebemittel zumindest teilweise radial und axial ineinandergeschachtelt angeordnet sind. Dies kann entweder dadurch erfolgen, daß der Verstellmotor oder dessen Antriebswelle einen zentralen Durchbruch zur Aufnahme der Getriebemittel aufweist oder daß die Getriebemittel einen zentralen Durchbruch zur Aufnahme des Verstellmotors aufweisen.

Um eine hohe Montage- und Wartungsfreundlichkeit zu erzielen, wird gemäß einer bevorzugten Ausgestaltung der Erfindung vorgeschlagen, daß der Grundkörper in eine Schieberbaugruppe zur Aufnahme des Arbeitsschiebers und gegebenenfalls des Ausgleichsschiebers, eine Antriebsbaugruppe zur Aufnahme des Verstellmotors und der Getriebemittel und eine den Werkzeugschaft aufweisende Anschlußbaugruppe unterteilt ist, die an axialen Trennstellen lösbar miteinander verbunden sind. Die Schieberbaugruppe enthält dabei zweckmäßig eine Meßeinrichtung zur direkten Messung des Verstellwegs des Antriebsschiebers relativ zum Grundkörper. Weiter ist in der Schieberbaugruppe und/oder der Antriebsbaugruppe eine mit der Meßeinrichtung verbundene Meß- und Regelelektronik zur Ansteuerung des Verstellmotors angeordnet. In der Anschlußbaugruppe befindet sich eine Schnittstelle für eine induktive Stromversorgung oder Datenübertragung, während zusätzlich im Grundkörper, vorzugsweise im Bereich der Schieberbaugruppe eine Schnittstelle für eine galvanische Stromversorgung und Datenübertragung angeordnet sein kann.

Eine weitere bevorzugte Ausgestaltung zur Lösung der Erfindungsaufgabe sieht vor, daß der Verstellmotor mit seinem rotationssymmetrischen Motorgehäuse in einer zur Grundkörperachse konzentrischen Ausnehmung des Grundkörpers angeordnet ist, die einen durch das Motorgehäuse begrenzten, flüssigkeitsdichten, mit einem Kühlmittelstrom beaufschlagbaren Spaltraum für die Motorkühlung enthalten kann. Der den Spaltraum enthaltenden Teil der Ausnehmung ist zweckmäßig in der Anschlußbaugruppe angeordnet. Da auch im Bereich der Stromversorgungs- und Datenübertragungsschnittstelle thermische Energie abgeführt werden muß, ist es von Vorteil, wenn die Stromversorgungs- und Datenübertragungsschnittstelle in einem außenseitig breitflächig mit einem Kühlmittelstrom beaufschlagbaren Gehäuseteil der Anschlußbaugruppe angeordnet ist.

Zur Versorgung der Werkzeugaufnahme mit einem Kühlschmiermittel kann der Arbeitsschieber mit einer mit der Werkzeugaufnahme kommunizierenden, parallel zur Verstellrichtung des Arbeitsschiebers ausgerichteten Radialbohrung für den Anschluß an eine grundkörperfeste Kühlschmiermittelleitung versehen werden. Die grundkörperfeste Kühlschmiermittelleitung weist zu diesem Zweck ein in die Radialbohrung gleitend und flüssigkeitsdicht eingreifendes Steckrohr auf.

Um die Schieberbaugruppe gegen Schmutz- und Kühlschmiermittelzutritt abzudichten, weist sie ein über ein Deckelteil mit dem Grundkörper dreh- und verschiebefest verspanntes Mantelrohr auf.

Der erfindungsgemäße Werkzeugkopf wird mit Vorteil als Plandrehkopf oder Ausdrehkopf eingesetzt.

Im folgenden wird die Erfindung anhand der Zeichnung näher erläutert. Es zeigen
- Fig. 1: eine Seitenansicht eines als Plandrehkopf ausgebildeten Werkzeugkopfs;
- Fig. 2: eine Draufsicht auf den Werkzeugkopf nach Fig. 1;
- Fig. 3: einen Schnitt entlang der Schnittlinie III-III der Fig. 2;
- Fig. 4: einen Schnitt entlang der Schnittlinie IV-IV der Fig. 2;
- Fig. 5: einen Schnitt entlang der Schnittlinie V-V der Fig. 4;
- Fig. 6: eine Draufsicht auf die Antriebsbaugruppe des Werkzeugkopfs bei abgenommener Schieberbaugruppe;
- Fig.7: eine Draufsicht auf einen erfindungsgemäßen Plandrehkopf mit als Rundschieber ausgebildetem Arbeitsschieber.

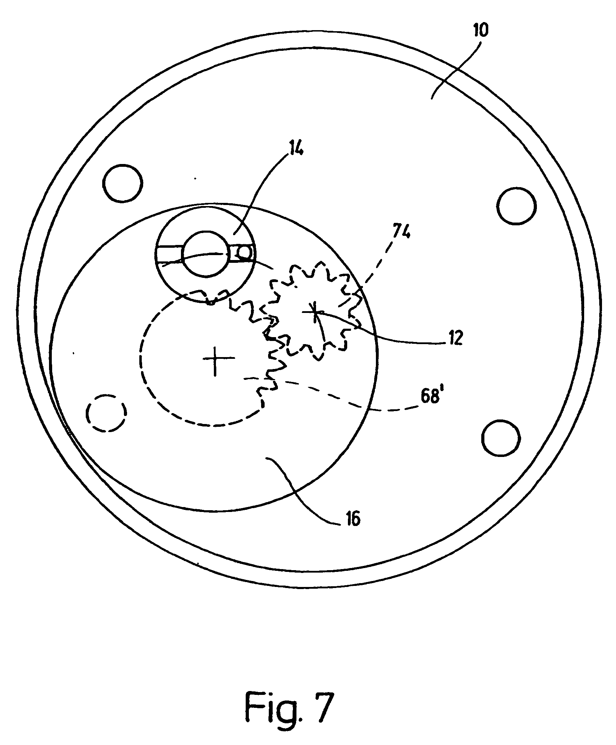

Die in der Zeichnung dargestellten Werkzeugköpfe sind als Plandrehköpfe für den Einsatz in Werkzeugmaschinen bestimmt. Gegenstand der vorliegenden Erfindung ist der in Fig. 7 dargestellte Plandrehkopf, dessen Arbeitsschieber 16 als exzentrisch auf dem Werkzeugkopf angeordneter Rundschieber ausgebildet ist, der über ein Antriebsritzel 74 und ein mit dem Arbeitsschieber starr verbundenes Zahnrad 68' unter im wesentlichen radialer Verstellung der Werkzeugaufnahme 14 drehbar ist. Durch die Drehung des Rundschiebers 16 ergibt sich keine Massenverlagerung, so daß hier kein Ausgleichsschieber erforderlich ist. Der Verstellmotor 24 kommt in diesem Fall mit einer geringen Antriebsleistung aus.

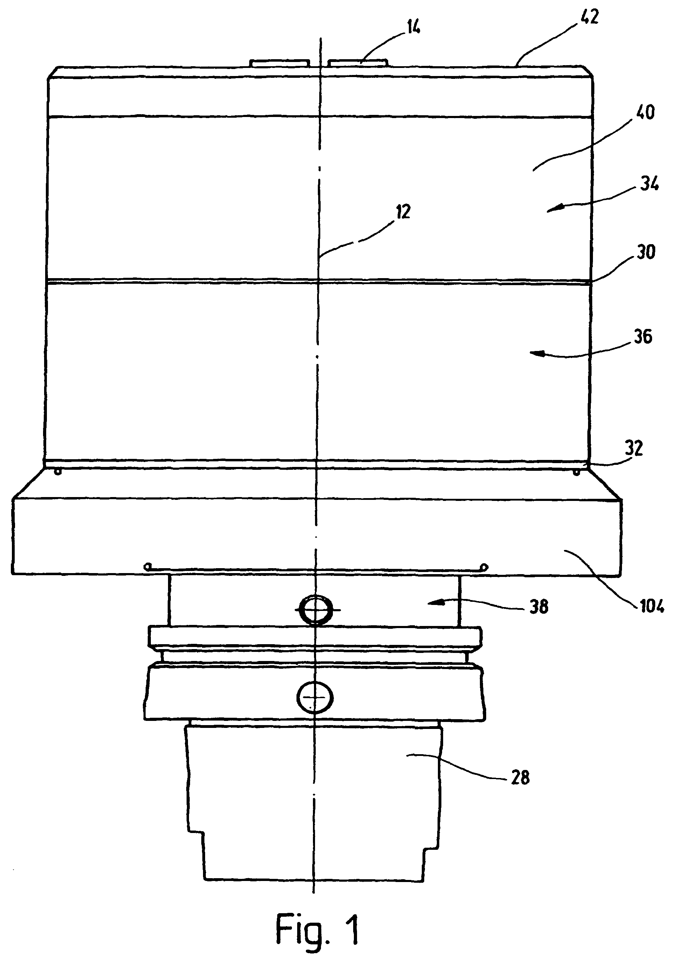

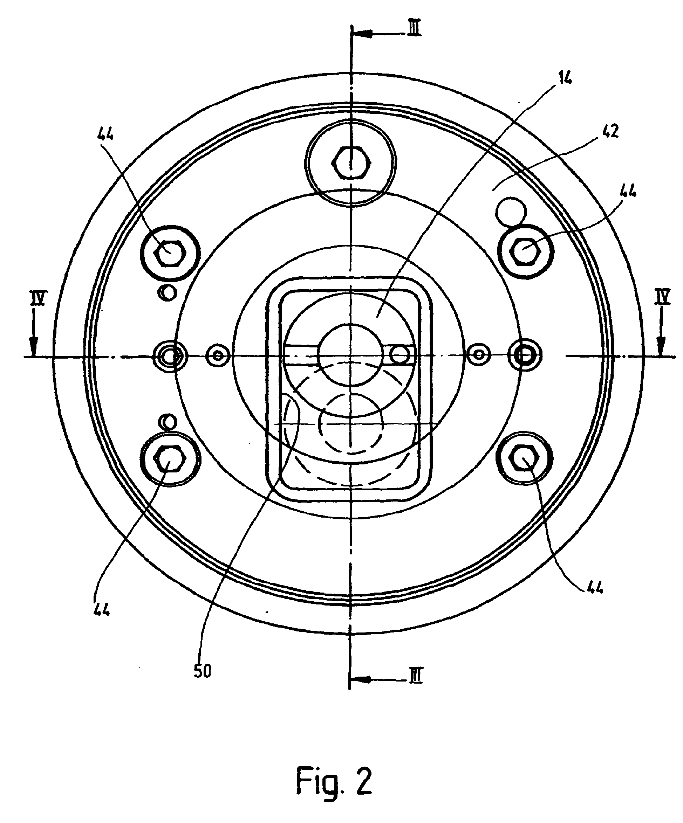

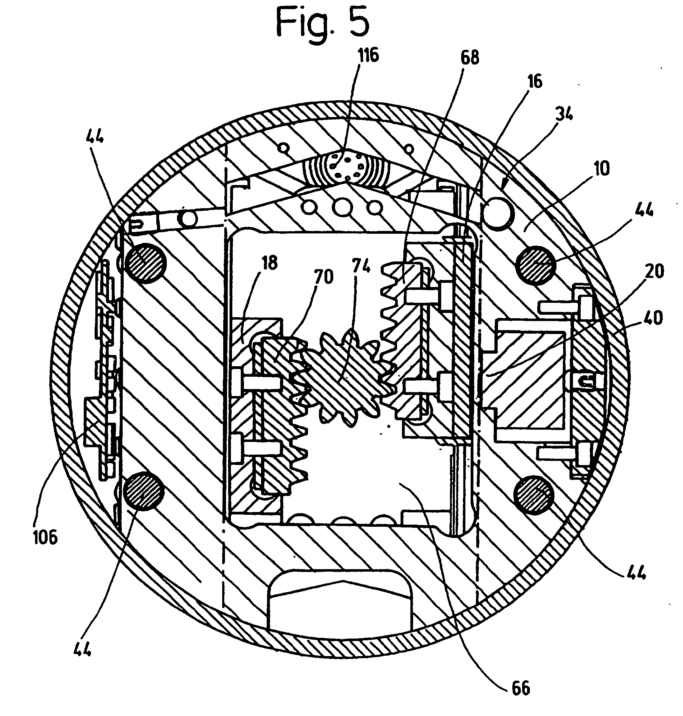

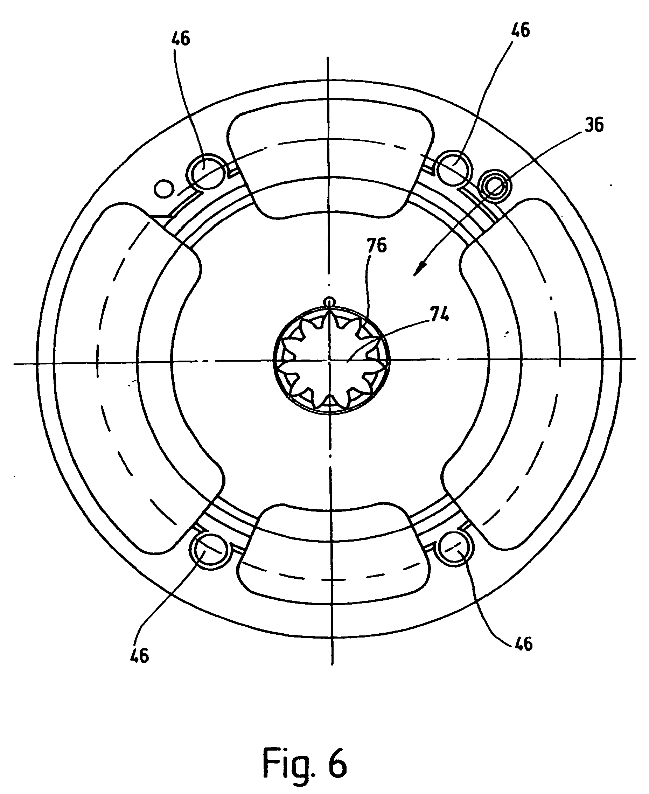

Der Antriebsmechanismus des in Fig. 7 gezeigten Plandrehkopfs stimmt im wesentlichen überein mit dem in den Fig. 1 bis 6 gezeigten Plandrehkopfs, dessen Arbeitsschieber 16 in einer Linearführung geführt ist und der für den Wuchtausgleich zusätzlich einen Ausgleichsschieber 18 umfaßt. Die Funktion des linear geführten Arbeitsschiebers und des Ausgleichsschiebers ist für die vorliegende Erfindung zwar nicht von Bedeutung. Gleichwohl wird im folgenden der Gesamtaufbau des in Fig. 1 bis 6 gezeigten Ausführungsbeispiels näher erläutert.

Der Werkzeugkopf besteht im wesentlichen aus einem um eine Drehachse 12 drehbaren Grundkörper 10, einem im Grundkörper 10 quer zur Drehachse 12 verschiebbaren, eine Werkzeugaufnahme 14 für ein Schneidwerkzeug tragenden Arbeitsschieber 16, einem in entgegengesetzter Richtung des Arbeitsschiebers 16 im Grundkörper 10 verschiebbaren Ausgleichsschieber 18 (nur Fig. 1 bis 6), einer Meßeinrichtung 20 zur direkten Verstellwegmessung des Arbeitsschiebers 16 relativ zum Grundkörper 10, einem unter Zwischenschaftung eines Untersetzungsgetriebes 22 auf den Arbeitsschieber 16 und den Ausgleichsschieber 18 einwirkenden elektrischen Verstellmotor 24, einer Stromversorgungseinrichtung 26 und einem axial über den Grundkörper 10 überstehenden Werkzeugsctiaft 28, der mit einer nicht dargestellten Maschinenspindel einer Werkzeugmaschine kuppelbar ist.

Der Werkzeugkopf ist aus drei an axialen Trennstellen 30,32 lösbar miteinander verbindbaren Baugruppen zusammengesetzt, einer den Arbeitsschieber 16 und den Ausgleichsschieber 18 aufnehmenden Schieberbaugruppe 34, einer den Verstellmotor 24 und das Untersetzungsgetriebe 22 enthaltenden Antriebsbaugruppe 36 und einer den Werkzeugschaft 28 und die Stromversorgungseinrichtung 26 enthaltenden Anschlußbaugruppe 38. Die Schieberbaugruppe 34 wird an ihrem Umfang von einem Mantelrohr 40 aus Metall oder Kunststoff umfaßt und stimseitig durch ein Deckelteil 42 verschlossen. Die Verbindung der Schieberbaugruppe 34 und der Antriebsbaugruppe 36 erfolgt mit Hilfe der achsparallelen Schrauben 44, die durch das Deckelteil 42 und nicht dargestellte Durchgangsöffnungen der Schieberbaugruppe 34 hindurch in Gewindebohrungen 46 der Antriebsbaugruppe 36 eingedreht sind. Die Anschlußbaugruppe 38 ist von der anderen Stirnseite her mittels Schrauben 48 an der Antriebsbaugruppe 36 angeschraubt.

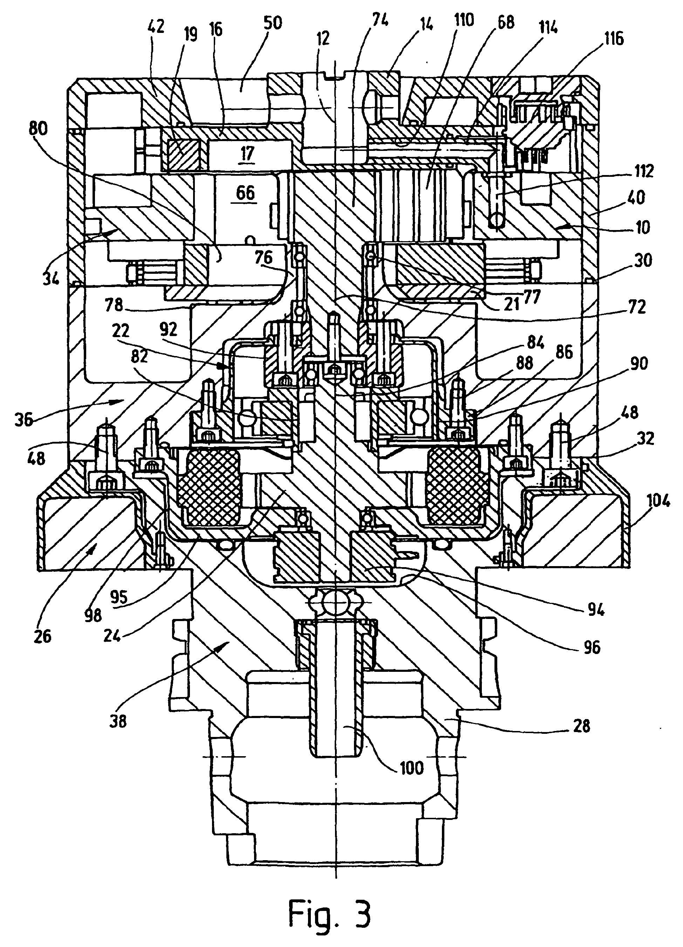

Der mit der Werkzeugaufnahme 14 durch ein Langloch 50 des Deckelteils 42 hindurchgreifende Arbeitsschieber 16 ist in einer grundkörperfesten prismenförmigen Wälzführung 52 in Verschieberichtung geführt. Die Wälzführung ist dabei mittels nicht dargestellter, gegen die grundkörperfesten Führungsprismen 54 andrückender Klemmkeile spielfrei gestellt. Da die Wälzführung 52 bei hohen Schneidkräften über die Werkzeugaufnahme 14 einer Momentenbelastung ausgesetzt ist, die zu einer Biegeverformung führen kann, ist zusätzlich eine bei Erreichen der elastischen Verformungsgrenze wirksam werdende Gleitführung 56 für den Arbeitsschieber 16 vorgesehen. Im unbelasteten Zustand bildet sich vor der Gleitführung 56 ein Freiraum 58 aus, in den hinein sich das arbeitsschieberfeste Führungsprisma 52 im Belastungszustand bis zur Anlage gegen das Gleitlager 56 elastisch verbiegen kann. Dies sorgt dafür, daß bei schwerer Zerspanung das Werkzeug über die Gleitführung 56 gedämpft und dadurch ein Rattem oder Vibrieren vermieden wird. Der Arbeitsschieber ist auf seiner einen Breitseite mit Hohlräumen 17 versehen. Aus Fig. 3 ist zu ersehen, daß der in größtem Abstand von der Werkzeugaufnahme 14 in Verschieberichtung angeordnete Hohlraum mit einem Schwermetall 19 ausgefüllt.

Der vorzugsweise aus einem Schwermetall bestehende Ausgleichsschieber 18 ist ebenfalls in einer grundkörperfesten Wälzführung 60, die nicht spielfrei gestellt sein muß, geführt. Auf seiner einen Breitseite ist der Ausgleichsschieber 18 mit einem abnehmbaren oder austauschbaren plattenförmigen Massenelement 21 bestückt, das für den Wuchtausgleich in seiner Masse durch Materialabtrag veränderbar ist.

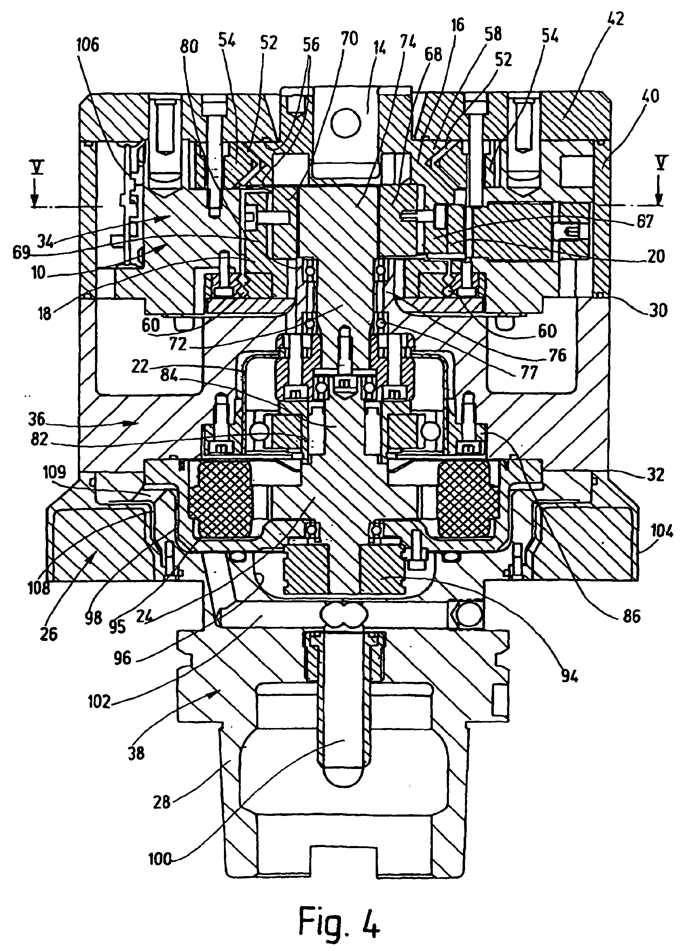

Der Arbeitsschieber 16 und der Ausgleichsschieber 18 sind in axialem Abstand voneinander angeordnet. Wie insbesondere aus Fig. 4 zu ersehen ist, weisen sie ein im wesentlichen L-förmiges Profil auf, wobei an den jeweils kurzen, in den Freiraum 66 eingreifenden Schenkeln 67,69 Zahnplatten 68,70 angeordnet sind, die mit einem auf der zur Drehachse 12 koaxialen Ausgangswelle 72 des Untersetzungsgetriebes 22 angeordneten Antriebsritzel 74 kämmen. Auf diese Weise werden der Arbeitsschieber 16 und der Ausgleichsschieber 18 bei drehendem Antriebsritzel 74 gegensinnig verschoben.

Die Ausgangswelle 72 ist in einer axial über die Antriebsbaugruppe 36 überstehenden Lagerhülse 76 mittels zweier Kugellager 77 gelagert. Sie greift zusammen mit der Lagerhülse durch eine Öffnung 78 in der Schieberbaugruppe 34 und durch ein Langloch 80 im Ausgleichsschieber 18 von der Seite der Antriebsbaugruppe 36 her ein.

Bei dem Untersetzungsgetriebe 22 handelt es sich um ein Harmonic-Drive-Getriebe, dessen ovale Antriebsscheibe 82 mit der zur Drehachse 12 koaxialen Abtriebswelle 84 des Verstellmotors 24 gekuppelt ist, dessen innenverzahnter Ring 86 mit Hilfe der Schrauben 88 mit dem Grundkörper 10 im Bereich der Antriebsbaugruppe 36 drehfest verbunden ist und dessen flexible außenverzahnte Hülse 90 über das Kupplungsstück 92 mit der Ausgangswelle 72 gekuppelt ist.

Der in Fig. 3 und 4 vereinfacht dargestellte, mit einem Drehgeber 94 bestückte Verstellmotor 24 steht mit seinem Motorgehäuse 95 über die Antriebsbaugruppe 36 axial über und greift dort in eine zur Drehachse 12 konzentrische topfartige Ausnehmung 96 der Anschlußbaugruppe 38 unter Freilassung eines Spaltraums 98 ein. Der Spaltraum 98 kommuniziert mit den Kanälen 100,102 der Anschlußbaugruppe 38 und ist über diese von der Werkzeugmaschine her mit einem Kühlmittel beaufschlagbar. Auf diese Weise kann die beim Betrieb des Verstellmotors anfallende Abwärme abgeführt werden.

Die Stromversorgungseinrichtung 26 weist ein an der Anschlußbaugruppe 38 angeordnetes Spulengehäuse 104 auf, in dem sich eine in einer mechanisch belastbaren Gußmasse aus Kunststoff oder Kunstharz eingebettete Sekundärspule mit zugehöriger Stabilisierungselektronik befindet.

Die Sekundärspule ist Bestandteil einer induktiven Übertragungsstrecke der Stromversorgungseinrichtung 26, die für die Stromversorgung des Verstellmotors 24 und der im Werkzeugkopf enthaltenen Elektronikschaltungen 106 sorgt. Weiter dient die Induktionsstrecke zur bidirektionalen Datenübertragung, wobei die Datensignale dem Induktionsstrom aufmoduliert werden. Die nicht dargestellte Primärspule der Stromversorgungseinrichtung 26 ist in einem maschinenseitigen Spulengehäuse angeordnet, das radial außerhalb des Werkzeugschaftes 28 in einen freien Zwischenraum zwischen der Stimfläche einer Maschinenspindel und der Stimfläche des werkzeugkopfseitigen Spulengehäuses 104 eingreift. Auf der Außenseite des Spulengehäuses 104 befindet sich ein Spaltraum 108, der über Kanäle 109 mit dem motorseitigen Spaltraum 98 kommuniziert und dadurch mit Kühlmittel beaufschlagbar ist. Auf diese Weise kann die in der Sekundärspule der Stromversorgungseinrichtung 26 entstehende Abwärme nach außen abgeführt werden.

Ein Teil des über die Kanäle 100, 102 zugeführten Kühlschmiermittels wird innerhalb des Grundkörpers 10 der Werkzeugaufnahme 14 und über diese dem nicht dargestellten Schneidenträger zugeführt. Zu diesem Zweck weist der Arbeitsschieber 16 eine parallel zu seiner Verschieberichtung ausgerichtete, bis zur Werkzeugaufnahme 14 reichende Radialbohrung 110 auf, in die ein mit den grundkörperseitigen Kühlmittelkanälen 112 kommunizierendes Steckrohr 114 gleitend und flüssigkeitsdicht eingreift.

Im Bereich der Schieberbaugruppe befindet sich zusätzlich eine Schnittstelle mit einer Steckerbuchse 116 für die galvanische Stromversorgung und Datenübertragung.

Das in Fig. 7 in einer Draufsicht dargestellte Ausführungsbeispiel des erfindungsgemäßen Plandrehkopfs unterscheidet sich von dem Ausführungsbeispiel nach Fig. 1 bis 6 lediglich dadurch, daß der Arbeitsschieber 16 als exzentrisch auf dem Werkzeugkopf angeordneter Rundschieber ausgebildet ist. Die Baugruppen bis zum Antriebsritzel stimmen mit dem Ausführungsbeispiel nach Fig. 1 bis 6 überein.

Zusammenfassend ist folgendes festzuhalten: Die Erfindung bezieht sich auf einen Werkzeugkopf für den Einsatz in Werkzeugmaschinen. Der Werkzeugkopf weist einen Grundkörper 10, einen axial über den Grundkörper überstehenden, mit einer Maschinenspindel verbindbaren Werkzeugschaft 28, mindestens einen quer zur Grundkörperachse 12 verstellbaren, eine stimseitig überstehende Werkzeugaufnahme 14 aufweisenden Arbeitsschieber und einen im Grundkörper angeordneten, über Getriebemittel in Verstellrichtung auf den Arbeitsschieber 16 einwirkenden Verstellmotor 24 auf. Um eine kompakte, montagefreundliche und betriebssichere Bauweise zu erzielen, weisen die Getriebemittel eine konzentrisch zur Grundkörperachse 12 drehbare Ausgangswelle 72 auf, die ein mit einer arbeitsschieberseitigen Verzahnung 68' kämmendes Antriebsritzel 74 trägt. Der Arbeitsschieber 16 ist gemäß der Erfindung als um eine zur Grundkörperachse 12 parallele Achse drehbarer Rundschieber ausgebildet, wobei die Werkzeugaufnahme 14 exzentrisch auf dem Rundschieber angeordnet ist und die Verzahnung durch ein mit dem Antriebsritzel 74 kämmendes Zahnrad 68' gebildet ist.

## Patentansprüche

1. Werkzeugkopf für den Einsatz in Werkzeugmaschinen, mit einem Grundkörper (10), mit einem axial über den Grundkörper (10) überstehenden, mit einer Maschinenspindel kuppelbaren Werkzeugschaft (28), mit mindestens einem im wesentlichen quer zur Grundkörperachse (12) verstellbaren, eine stimseitige Werkzeugaufnahme (14) aufweisenden Arbeitsschieber (16) und mit einem im Grundkörper (10) angeordneten, über Getriebemittel (22) in Verstellrichtung auf den Arbeitsschieber (16) einwirkenden Verstellmotor (24), wobei die Getriebemittel eine konzentrisch zur Grundkörperachse (12) drehbare Ausgangswelle (72) aufweisen, die ein mit einer arbeitsschieberseitigen, vorzugsweise arbeitsschieberfesten Verzahnung (68') kämmendes Antriebsritzel (74) trägt, **dadurch gekennzeichnet, dass** der Arbeitsschieber (16) als um eine zur Grundkörperachse (12) parallele Achse drehbarer Rundschieber ausgebildet ist, dass die Werkzeugaufnahme (14) exzentrisch auf dem Rundschieber angeordnet ist und dass die Verzahnung durch ein mit dem Antriebsritzel (74) kämmendes Zahnrad (68') gebildet ist.

2. Werkzeugkopf nach Anspruch 1, **dadurch gekennzeichnet, dass** die Getriebemittel ein Untersetzungsgetriebe (22) mit zueinander fluchtenden Ein- und Ausgangsachsen (84,72) aufweisen, wobei das Untersetzungsgetriebe (22) als Harmonic-Drive-Getriebe oder als Planetengetriebe ausgebildet ist.

3. Werkzeugkopf nach Anspruch 2, **dadurch gekennzeichnet, dass** der Verstellmotor (24) und das Untersetzungsgetriebe (22) zumindest teilweise radial und axial ineinandergeschachtelt angeordnet sind.

4. Werkzeugkopf nach Anspruch 3, **dadurch gekennzeichnet, dass** der Verstellmotor (24) oder dessen Abtriebswelle (84) einen zentralen Durchbruch zur Aufnahme des Untersetzungsgetriebes (22) aufweist.

5. Werkzeugkopf nach Anspruch 3, **dadurch gekennzeichnet, dass** das Untersetzungsgetriebe (22) einen zentralen Durchbruch zur Aufnahme des Verstellmotors (24) aufweist.

6. Werkzeugkopf für den Einsatz in Werkzeugmaschinen, mit einem Grundkörper (10), mit einem axial über den Grundkörper (10) überstehenden, mit einer Maschinenspindel kuppelbaren Werkzeugschaft (28), mit mindestens einem im wesentlichen quer zur Grundkörperachse (12) verstellbaren, eine stimseitige Werkzeugaufnahme (14) aufweisenden Arbeitsschieber (16) und mit einem im Grundkörper (10) angeordneten, über Getriebemittel (22) in Verstellrichtung auf den Arbeitsschieber (16) einwirkenden Verstellmotor (24), wobei die Getriebemittel eine konzentrisch zur Grundkörperachse (12) drehbare Ausgangswelle (72) aufweisen, die ein mit einem Zahnrad einer arbeitsschieberseitigen, vorzugsweise arbeitsschieberfesten Verzahnung (68') kämmendes Antriebsritzel (74) trägt, **gekennzeichnet durch** eine Schieberbaugruppe (34) zur Aufnahme des Arbeitsschiebers (16) und eine Antriebsbaugruppe (36) zur Aufnahme des Verstellmotors (24) und der Getriebemittel (22), die an axialen Trennstellen (30, 32) lösbar miteinander verbunden sind, wobei der Arbeitsschieber (16) als um eine zur Grundkörperachse (12) parallele Achse drehbarer Rundschieber ausgebildet ist und die Werkzeugaufnahme (14) exzentrisch auf dem Rundschieber angeordnet ist und wobei die Getriebemittel (22) ein als Harmonic-Drive-Getriebe ausgebildetes Untersetzungsgetriebe (22) mit zueinander fluchtenden Ein- und Ausgangswellen aufweisen, das eine mit einer zur Drehachse (12) koaxialen Abtriebswelle (84) des Verstellmotors (24) gekuppelte ovale Antriebsscheibe (82), einen mit dem Grundkörper (10) im Bereich der Antriebsbaugruppe (36) drehfest verbundenen innenverzahnten Ring (86) und eine mit der Ausgangswelle (72) gekuppelte flexible außenverzahnte Hülse (90) aufweist.

7. Werkzeugkopf nach einem der Ansprüche 1 bis 6, **gekennzeichnet durch** eine Schieberbaugruppe (34) zur Aufnahme des Arbeitsschiebers eine Antriebsbaugruppe (36) zur Aufnahme des Verstellmotors (24) und der Getriebemittel (22) und eine den Werkzeugschaft aufweisende Anschlussbaugruppe (38), die an axialen Trennstellen (30,32) lösbar miteinander verbunden sind.

8. Werkzeugkopf nach Anspruch 6 oder 7, **dadurch gekennzeichnet, dass** die Schieberbaugruppe (34) eine Meßeinrichtung (20) zur direkten Messung des Verstellwegs des Arbeitsschiebers (16) relativ zum Grundkörper (10) enthält.

9. Werkzeugkopf nach Anspruch 8, **dadurch gekennzeichnet, dass** die Schieberbaugruppe und/oder die Antriebsbaugruppe eine mit der Meßeinrichtung (20) verbundene Meß- und Regelelektronik (106) zur Ansteuerung des Verstellmotors (24) enthält.

10. Werkzeugkopf nach einem der Ansprüche 7 bis 9, **dadurch gekennzeichnet, dass** die Anschlussbaugruppe (38) eine Schnittstelle (26,104) für eine induktive Stromversorgung und Datenübertragung enthält.

11. Werkzeugkopf nach einem der Ansprüche 1 bis 10, **dadurch gekennzeichnet, dass** der Verstellmotor (24) mit seinem rotationssymmetrischen Motorgehäuse (95) in einer zur Grundkörperachse konzentrischen Ausnehmung (96) des Grundkörpers unter Freilassung eines mit einem Kühlmittel beaufschlagbaren Spaltraums (98) für die Motorkühlung angeordnet ist.

12. Werkzeugkopf nach Anspruch 11, **dadurch gekennzeichnet, dass** der den Spaltraum (98) enthaltende Teil der Ausnehmung (96) in einer Anschlussbaugruppe (38) angeordnet ist.

13. Werkzeugkopf nach einem der Ansprüche 10 bis 12, **dadurch gekennzeichnet, dass** die Stromversorgungsschnittstelle (26,104) in einem außenseitig über einen Spaltraum (108) mit einem Kühlmittel beaufschlagbaren Gehäuse (104) angeordnet ist.

14. Werkzeugkopf nach einem der Ansprüche 6 bis 13, **dadurch gekennzeichnet, dass** die Antriebsbaugruppe (36) mit einer axial überstehenden Lagerhülse (76) für die Ausgangswelle (72) in eine axial offene Ausnehmung (78) der Schieberbaugruppe (34) eingreift.

15. Werkzeugkopf nach einem der Ansprüche 1 bis 14, **dadurch gekennzeichnet, dass** der Arbeitsschieber (16) eine mit der Werkzeugaufnahme (14) kommunizierende, parallel zur Verstellrichtung ausgerichtete Radialbohrung (110) für den Anschluß an eine grundkörperfeste Kühlmittelleitung (112) aufweist.

16. Werkzeugkopf nach Anspruch 15, **dadurch gekennzeichnet, dass** die grundkörperfeste Kühlmittelleitung (112) ein in die Radialbohrung (110) gleitend und flüssigkeitsdicht eingreifendes Steckrohr (114) aufweist.

## Claims

1. A tool head for use in machine tools, having a base body (10), having a tool shaft (28) which projects axially over the base body (10) and can be coupled to a machine spindle, having at least one working slide valve (16) which is adjustable substantially transversely to the base body axis (12) and has an end-face tool holder (14), and having an adjusting motor (24) which is arranged in the base body (10) and acts on the working slide valve (16) in the adjustment direction by way of gear means (22), the gear means having an output shaft (72) which is rotatable concentrically with the base body axis (12) and which carries a drive pinion (74) meshing with a gearing (68') on the working-slide-valve side, which is preferably fixed to the working slide valve, **characterised in that** the working slide valve (16) is constructed as a tubular slide valve which is rotatable about an axis parallel to the base body axis (12), **in that** the tool holder (14) is arranged eccentrically on the tubular slide valve and **in that** the gearing is formed by a toothed wheel (68') meshing with the drive pinion (74).

2. A tool head according to Claim 1, **characterised in that** the gear means have a step-down gear (22) with mutually flush input and output axles (84, 72), the step-down gear (22) being constructed as a harmonic drive gear or as a planetary gear.

3. A tool head according to Claim 2, **characterised in that** the adjusting motor (24) and the step-down gear (22) are arranged such that they nest at least partially radially and axially inside one another.

4. A tool head according to Claim 3, **characterised in that** the adjusting motor (24) or its drive shaft (84) has a central opening for receiving the step-down gear (22).

5. A tool head according to Claim 3, **characterised in that** the step-down gear (22) has a central opening for receiving the adjusting motor (24).

6. A tool head for use in machine tools, having a base body (10), having a tool shaft (28) which projects axially over the base body (10) and can be coupled to a machine spindle, having at least one working slide valve (16) which is adjustable substantially transversely to the base body axis (12) and has an end-face tool holder (14), and having an adjusting motor (24) which is arranged in the base body (10) and acts on the working slide valve (16) in the adjustment direction by way of gear means (22), the gear means having an output shaft (72) which is rotatable concentrically with the base body axis (12) and which carries a drive pinion (74) meshing with a gearing (68') on the working-slide-valve side, which is preferably fixed to the working slide valve, **characterised by** a slide valve assembly (34) for receiving the working slide valve (16) and a drive assembly (36) for receiving the adjusting motor (24) and the gear means (22), which are detachably connected together at axial separating points (30, 32), the working slide valve (16) being constructed as a tubular slide valve which is rotatable about an axis parallel to the base body axis (12), and the tool holder (14) being arranged eccentrically on the tubular slide valve, and the gear means (22) having a step-down gear (22) with mutually flush input and output shafts, which is constructed as a harmonic drive gear and has an oval drive wheel (82) which is coupled to a driven shaft (84) of the adjusting motor (24), said driven shaft being coaxial with the axis of rotation (12), an internal geared ring (86) which is non-rotatably connected to the base body (10) in the region of the drive assembly (36) and a flexible external geared sleeve (90) which is coupled to the output shaft (72).

7. A tool head according to one of Claims 1 to 6, **characterised by** a slide valve assembly (34) for receiving the working slide valve, a drive assembly (36) for receiving the adjusting motor (24) and the gear means (22) and a connection assembly (38) having the tool shaft, which are detachably connected together at axial separating points (30, 32).

8. A tool head according to Claim 6 or 7, **characterised in that** the slide valve assembly (34) contains a measuring device (20) for the direct measurement of the adjustment path of the working slide valve (16) relative to the base body (10).

9. A tool head according to Claim 8, **characterised in that** the slide valve assembly and/or the drive assembly contains measuring and control electronics (106) connected to the measuring device (20) for the purpose of controlling the adjusting motor (24).

10. A tool head according to one of Claims 7 to 9, **characterised in that** the connection assembly (38) contains an interface (26, 104) for an inductive current supply and data transmission.

11. A tool head according to one of Claims 1 to 10, **characterised in that** the adjusting motor (24) is arranged with its rotationally symmetrical motor housing (95) in a cutout (96) in the base body to leave a gap area (98) which can be acted upon by coolant for cooling the motor, the cutout being concentric with the base body axis.

12. A tool head according to Claim 11, **characterised in that** the part of the cutout (96) which contains the gap area (98) is arranged in a connection assembly (38).

13. A tool head according to one of Claims 10 to 12, **characterised in that** the current supply interface (26, 104) is arranged in a housing (104) which can be acted upon externally by coolant by way of a gap area (108).

14. A tool head according to one of Claims 6 to 13, **characterised in that** the drive assembly (36) engages in an axially open cutout (78) in the slide valve assembly (34) by means of an axially projecting bearing sleeve (76) for the output shaft (72).

15. A tool head according to one of Claims 1 to 14, **characterised in that** the working slide valve (16) has a radial bore (110) which communicates with the tool holder (14) and is aligned parallel to the adjustment direction for connection to a coolant line (112) fixed to the base body.

16. A tool head according to Claim 15, **characterised in that** the coolant line (112) fixed to the base body has a push-in tube (114) which slides into the radial bore (110) and engages therein in liquid-tight manner.

## Revendications

1. Tête porte-outil à utiliser dans des machines-outils, avec un corps de base (10), avec une tige porte-outil (28) dépassant axialement du corps de base (10) et pouvant être couplée à une broche de machine, avec au moins un coulisseau de travail (16) pouvant être déplacé sensiblement transversalement à l'axe (12) du corps de base et présentant un porte-outil terminal (14), et avec un servomoteur (24) disposé dans le corps de base (10) et agissant, par l'intermédiaire de moyens de transmission (22), dans la direction de déplacement sur le coulisseau de travail (16), sachant que les moyens de transmission présentent un arbre de sortie (72) rotatif concentriquement à l'axe (12) du corps de base, arbre qui porte un pignon menant (74) engrenant avec une denture (68') côté coulisseau de travail, de préférence solidaire du coulisseau de travail,
**caractérisée en ce que** le coulisseau de travail (16) est réalisé sous forme de coulisseau circulaire rotatif autour d'un axe parallèle à l'axe (12) du corps de base, **en ce que** le porte-outil (14) est disposé excentriquement sur le coulisseau circulaire, et **en ce que** la denture est formée par une roue dentée (68') engrenant avec le pignon menant (74).

2. Tête porte-outil selon la revendication 1, **caractérisée en ce que** les moyens de transmission présentent une transmission démultiplicatrice (22) avec des axes d'entrée et de sortie (84, 72) mutuellement alignés, la transmission démultiplicatrice (22) étant réalisée sous forme de boîte de transmission à démultiplicateur harmonique ou d'engrenage planétaire.

3. Tête porte-outil selon la revendication 2, **caractérisée en ce que** le servomoteur (24) et la transmission démultiplicatrice (22) sont disposés en étant au moins partiellement imbriqués radialement et axialement l'un dans l'autre.

4. Tête porte-outil selon la revendication 3, **caractérisée en ce que** le servomoteur (24) ou son arbre mené (84) présente un percement central pour recevoir la transmission démultiplicatrice (22).

5. Tête porte-outil selon la revendication 3, **caractérisée en ce que** la transmission démultiplicatrice (22) présente un percement central pour recevoir le servomoteur (24).

6. Tête porte-outil à utiliser dans des machines-outils, avec un corps de base (10), avec une tige porte-outil (28) dépassant axialement du corps de base (10) et pouvant être couplée à une broche de machine, avec au moins un coulisseau de travail (16) pouvant être déplacé sensiblement transversalement à l'axe (12) du corps de base et présentant un porte-outil terminal (14), et avec un servomoteur (24) disposé dans le corps de base (10) et agissant, par l'intermédiaire de moyens de transmission (22), dans la direction de déplacement sur le coulisseau de travail (16), sachant que les moyens de transmission présentent un arbre de sortie (72) rotatif concentriquement à l'axe (12) du corps de base, arbre qui porte un pignon menant (74) engrenant avec une roue dentée d'une denture (68') côté coulisseau de travail, de préférence solidaire du coulisseau de travail, **caractérisée par** un sous-ensemble de coulisseau (34) pour recevoir le coulisseau de travail (16) et un sous-ensemble d'entraînement (36) pour recevoir le servomoteur (24) et les moyens de transmission (22), qui sont reliés entre eux de façon amovible en des points de séparation axiaux (30, 32), sachant que le coulisseau de travail (16) est réalisé sous forme de coulisseau circulaire rotatif autour d'un axe parallèle à l'axe (12) du corps de base et que le porte-outil (14) est disposé excentriquement sur le coulisseau circulaire, et sachant que les moyens de transmission présentent une transmission démultiplicatrice (22) réalisée sous forme de boîte de transmission à démultiplicateur harmonique avec des arbres d'entrée et de sortie mutuellement alignés, qui présente un disque menant ovale (82) couplé à un arbre mené (84) du servomoteur (24) qui est coaxial à l'axe de rotation (12), une bague (86) à denture intérieure reliée en solidarité de rotation au corps de base (10) dans la région du sous-ensemble d'entraînement (36), et un manchon souple (90) à denture extérieure couplé à l'arbre de sortie (72).

7. Tête porte-outil selon l'une des revendications 1 à 6, **caractérisée par** un sous-ensemble de coulisseau (34) pour recevoir le coulisseau de travail, un sous-ensemble d'entraînement (36) pour recevoir le servomoteur (24) et les moyens de transmission (22), et un sous-ensemble de raccordement (38) présentant la tige porte-outil, qui sont reliés entre eux de façon amovible en des points de séparation axiaux (30, 32).

8. Tête porte-outil selon la revendication 6 ou 7, **caractérisée en ce que** le sous-ensemble de coulisseau (34) contient un équipement de mesure (20) pour la mesure directe de la course de déplacement du coulisseau de travail (16) par rapport au corps de base (10).

9. Tête porte-outil selon la revendication 8, **caractérisée en ce que** le sous-ensemble de coulisseau et/ou le sous-ensemble d'entraînement contient une unité électronique (106) de mesure et de régulation, reliée à l'équipement de mesure (20), pour l'asservissement du servomoteur (24).

10. Tête porte-outil selon l'une des revendications 7 à 9, **caractérisée en ce que** le sous-ensemble de raccordement (38) contient une interface (26, 104) pour la transmission de données et l'alimentation électrique par induction.

11. Tête porte-outil selon l'une des revendications 1 à 10, **caractérisée en ce que** le servomoteur (24) est disposé, par son boîtier de moteur (95) à symétrie de révolution, dans un évidement (96) du corps de base qui est concentrique à l'axe du corps de base, en laissant libre un espace interstitiel (98) pouvant être alimenté par un réfrigérant pour le refroidissement du moteur.

12. Tête porte-outil selon la revendication 11, **caractérisée en ce que** la partie de l'évidement (96) contenant l'espace interstitiel (98) est disposée dans un sous-ensemble de raccordement (38).

13. Tête porte-outil selon l'une des revendications 10 à 12, **caractérisée en ce que** l'interface (26, 104) d'alimentation électrique est disposée dans un boîtier (104) pouvant être alimenté extérieurement en réfrigérant par l'intermédiaire d'un espace interstitiel (108).

14. Tête porte-outil selon l'une des revendications 6 à 13, **caractérisée en ce que** le sous-ensemble d'entraînement (36) s'engage, par un manchon de palier (76) axialement dépassant pour l'arbre de sortie (72), dans un évidement axialement ouvert (78) du sous-ensemble de coulisseau (34).

15. Tête porte-outil selon l'une des revendications 1 à 14, **caractérisée en ce que** le coulisseau de travail (16) présente un perçage radial (110), communiquant avec le porte-outil (14) et orienté parallèlement à la direction de déplacement, pour le raccordement à une conduite de réfrigérant (112) solidaire du corps de base.

16. Tête porte-outil selon la revendication 15, **caractérisée en ce que** la conduite de réfrigérant (112) solidaire du corps de base présente un tuyau d'emboîtement (114) s'engageant par coulissement et en étanchéité aux liquides dans le perçage radial (110).
